# EUROPÄISCHE PATENTANMELDUNG

(11) **EP 2 570 579 A2**
(43) Veröffentlichungstag der Anmeldung: **20.03.2013**
(21) Anmeldenummer: 12006231.0
(22) Anmeldetag: 04.09.2012
(51) Int. Cl.: E06B 3/54

(54) **Geklebter Punkthalter**

(30) Priorität: 15.09.2011 DE 202011105693 U
(71) Anmelder: Glassline GmbH, 74740 Adelsheim (DE)
(72) Erfinder: Bangratz, René, Dipl.-Ing., 74076 Heilbronn (DE); Peter, Frank, 74189 Weinsberg (DE); Schönig, Helge, 74861 Neudenau (DE)
(74) Vertreter: Schmid, Barbara

(57) **Zusammenfassung**

Ein Punkthalter (10) zur Befestigung einer Scheibe (22) an einem Bauanschlusselement besitzt eine Anschlusseinheit zur lösbaren Befestigung des Punkthalters (10) an einem Bauanschlusselement und eine Montagefläche (16) zur Befestigung des Punkthalters (10) mittels einer Klebeschicht (36) an einer Scheibe (22). Erfindungsgemäß ist zumindest eine Einfüll- oder Entlüftungsöffnung (18, 20) in der Montagefläche (16) des Punkthalters (10) vorhanden. Der Punkthalter (10) kann Bestandteil eines Scheiben-Elements sein, beispielsweise eines Scheiben-Geländers.

## Beschreibung

### TECHNISCHES GEBIET

Die Erfindung betrifft einen Punkthalter zur Befestigung einer Scheibe, insbesondere einer Glasscheibe, an einem Bauanschlusselement. Derartige Punkthalter werden beispielsweise zum Aufbau von Scheiben-Elementen verwendet. Bei diesen Scheiben-Elementen kann es sich insbesondere um vertikale oder horizontale Verglasungen, beispielsweise um Glasscheiben-Geländer, um Glasscheiben-Decken oder um Glasscheiben-Vordächern handeln.

### STAND DER TECHNIK

Eine erste Art von Punkthaltern erfordert eine Bohrung in der Scheibe, an der der Punkthalter befestigt wird. Entsprechende Punkthalter sind beispielsweise aus der DE 20 2008 012 502 U1 bekannt. Zur Befestigung des Punkthalters an der Bohrung in der Scheibe besitzt der Punkthalter ein Beschlagelement mit zwei Beschlagscheiben, die beidseitig der Scheibe vorhanden sind. Durch die Bohrung in der Scheibe wird ein Gewindestift geführt, der die beiden Beschlagscheiben miteinander verbindet, so dass diese die Scheibe zwischen sich einklemmen. Eine solche Befestigung kann nur bei solchen Scheiben erfolgen, die gebohrt werden können, was nicht bei allen Scheiben der Fall ist. Darüber hinaus muss die Bohrung exakt platziert werden, da eine spätere Ausrichtung der Punkthalter schwierig ist. Eine solche Bohrung ist darüber hinaus teuer und somit wirtschaftlich ungünstig. Die Bohrung stellt auch eine Verletzung der Scheibe und damit eine Schwachstelle des Scheiben-Elements dar. Daher kann die Bohrung nicht im Randbereich der Scheibe erfolgen, was zu Einschränkungen bei den Gestaltungsmöglichkeiten führen kann. In der Regel ist darüber hinaus eine Abdichtung der Bohrung in der Scheibe erforderlich, was den Montageaufwand und damit die Kosten erhöht.

Ferner sind Punkthalter bekannt, die mittels einer UV-Verklebung an einer Scheibe befestigt werden können. Gemäß der DE 199 39 172 C2 weisen die entsprechenden Punkthalter eine plane Montagefläche auf, die durch einen UV-stabilen und transparenten Klebstoff kraft- und formschlüssig mit einer Scheibe verbunden wird. Durch diese Klebebefestigung kann auf eine Bohrung in der Scheibe verzichtet werden. Da der Klebstoff unter UV-Bestrahlung zunächst aushärten muss, kann eine solche Befestigung jedoch lediglich bei transparenten Scheiben eingesetzt werden, die eine Bestrahlung der Klebeschicht durch die Scheibe ermöglichen. Bei dieser Aushärtung kann die Klebeschicht spröde werden, was eine optimale Befestigung des Punkthalters erschwert. Auch kann das Aufbringen der noch flüssigen Klebeschicht problematisch sein, da die Klebeschicht keinerlei Lufteinschlüsse aufweisen darf, um ein Absprengen des Punkthalters bei zu starker Erwärmung, beispielsweise durch Sonneneinstrahlung, zu verhindern. Die Dicke der Klebeschicht kann darüber hinaus nicht exakt eingestellt werden, so dass sich die Verklebung schlecht reproduzieren lässt und die Punkthalter bei statisch relevanten Verglasungen nicht eingesetzt werden können.

### DARSTELLUNG DER ERFINDUNG

Ausgehend von diesem vorbekannten Stand der Technik liegt der Erfindung die Aufgabe zugrunde, einen verbesserten Punkthalter anzugeben, der mittels einer Klebeschicht einfach und dauerhaft an einer Scheibe befestigt werden kann. Darüber hinaus liegt der Erfindung die Aufgabe zugrunde, eine Vorrichtung anzugeben, mittels der der erfindungsgemäße Punkthalter wirtschaftlich günstig an der Scheibe befestigt werden kann.

Der erfindungsgemäße Punkthalter ist durch die Merkmale des Hauptanspruchs 1 gegeben, ein Scheiben-Element mit erfindungsgemäßem Punkthalter ist Gegenstand des nebengeordneten Anspruchs 4. Die erfindungsgemäße Vorrichtung zur Befestigung des Punkthalters an einer Scheibe ist durch die Merkmale des nebengeordneten Anspruchs 9 gegeben. Ein erfindungsgemäßes Verfahren zur Befestigung des Punkthalters an einer Scheibe ist durch die Merkmale des nebengeordneten Anspruchs 13 gegeben. Sinnvolle Weiterbildungen der Erfindung sind Gegenstand von sich an diese Ansprüche anschließenden weiteren Ansprüchen.

Erfindungsgemäß besitzt der Punkthalter zur Befestigung einer Scheibe an einem Bauanschlusselement eine Anschlusseinheit zur lösbaren Befestigung des Punkthalters an dem Bauanschlusselement und eine Montagefläche zur Befestigung des Punkthalters mittels einer Klebeschicht an einer Scheibe. In der Montagefläche des Punkthalters ist zumindest eine Einfüll- oder Entlüftungsöffnung vorgesehen. Auf diese Weise kann ein Klebemittel in einen zwischen der Montagefläche und der Außenseite einer Scheibe vorhandenen Zwischenraum eingefüllt werden, während die in dem Zwischenraum vorhandene Luft gleichzeitig entweichen kann. In der Klebeschicht bilden sich auf diese Weise keine Lufteinschlüsse, so dass eine dauerhaft sichere Befestigung erreicht werden kann. Durch den Verzicht auf eine Bohrung in der Scheibe können darüber hinaus auch dünnere Scheiben sicher befestigt werden.

Der Zwischenraum zwischen der Montagefläche und der Außenseite der Scheibe, auf der der Punkthalter befestigt werden soll, kann durch eine umlaufende Manschette gebildet werden, auf die der Randbereich der Montagefläche des Punkthalters während des Befüllvorgangs mit dem Klebemittel aufgesetzt wird. Eine solche umlaufende Manschette kann beispielsweise in Form eines Dichtungsrings ausgebildet sein. Um eine möglichst genaue Lagefixierung des Punkthalters zu ermöglichen, kann der Dichtungsring einen L-förmigen Querschnitt aufweisen. Nach Beendigung des Befüllvorgangs mit dem Klebemittel kann die Manschette oder der Dichtungsring - sofern gewünscht - wieder von dem Punkthalter entfernt werden. In dieser umlaufenden Manschette können beispielsweise mehrere umfangmäßig verteilten Einfüllöffnungen vorhanden sein. Die in dem Zwischenraum vorhandene Luft könnte in diesem Fall durch eine in der Montagefläche des Punkthalters vorhandene Entlüftungsöffnung entweichen. Es wäre auch möglich, die Einfüllöffnung in der Montagefläche des Punkthalters vorzusehen, während die Entlüftungsöffnung in der umlaufenden Manschette vorhanden sind.

Als Klebemittel kann ein beliebiges Klebemittel verwendet werden. Es ist nicht erforderlich, ein flüssiges Klebemittel zu verwendet, das unter UV-Bestrahlung aushärtet. Während bislang insbesondere flüssige Klebemittel eingesetzt wurden, da sich der Auftrag der Klebeschicht ansonsten nicht ohne den Einschluss von Luft in der Klebeschicht bewerkstelligen ließ, können durch die Einfüllöffnung und die Entlüftungsöffnung nunmehr auch pastöse Klebemittel verwendet werden, beispielsweise Zwei-Komponenten-Klebemittel. Dies hat den Vorteil, dass eine Bestrahlung der Klebeschicht nicht länger erforderlich ist, so dass der Punkthalter auch bei nicht-transparenten Scheiben - beispielsweise bei beschichteten Scheiben - eingesetzt werden kann.

Das entsprechende Scheiben-Element, bei dem es sich insbesondere um eine horizontale oder vertikale Verglasung, beispielsweise um ein Geländer, ein Vordach oder eine Deckenkonstruktion handeln kann, besitzt zumindest eine Scheibe, die im Abstand zu einer Unterkonstruktion spannungsarm gelagert ist. Bei dieser Scheibe kann es sich insbesondere um eine Glasscheibe handeln. Eine solche Glasscheibe kann beispielsweise auch aus zwei oder mehr miteinander verbundenen wie insbesondere miteinander verklebten Einzelscheiben bestehen. Darüber hinaus besitzt das Scheiben-Element zumindest einen erfindungsgemäßen Punkthalter, der mittels einer Klebeschicht an der Scheibe befestigt ist. Mittels seiner Anschlusseinheit ist dieser Punkthalter an einem Bauanschlusselement befestigt, das seinerseits an der Unterkonstruktion befestigt werden kann.

Die Befestigung des Punkthalters an dem Bauanschlusselement kann sowohl über einen starren als auch über einen gelenkigen Anschluss erfolgen. Grundsätzlich sind diesbezüglich alle Anschlüsse denkbar, die im Stand der Technik bereits verwendet werden. Um Spannungen bei der Lagerung der Scheiben zu minimieren, können gelenkige Anschlüsse des Punkthalters, wie sie beispielsweise in der EP 0 972 905 B1 beschrieben sind, statisch bevorzugt sein.

Sofern in der umlaufenden Manschette keine Einfüll- oder Entlüftungsöffnungen vorgesehen werden sollen, kann der erfindungsgemäße Punkthalter sowohl zumindest eine Einfüllöffnung als auch zumindest eine Entlüftungsöffnung aufweisen. Die umlaufende Manschette muss in diesem Fall nicht mit Einfüll- oder Entlüftungsöffnungen versehen werden, so dass handelsübliche Manschetten verwendet werden können, was die Montagekosten des Punkthalters senken kann.

In einer bevorzugten Ausführungsform kann im Randbereich der Montagefläche des Punkthalters eine umlaufende Schulterausbildung vorhanden sein. Diese Schulterausbildung kann zur Lagefixierung eines Dichtungsrings verwendet werden. Als Dichtungsring kann somit beispielsweise ein herkömmlicher O-Ring mit einem runden oder mit einem etwa rechteckigen Querschnitt verwendet werden, der in verschiedenen Durchmessern im Handel erhältlich ist. Insbesondere kann es sich um einen Dichtungsring handeln, der auf einer Seite mit einer Klebeschicht versehen ist. Mittels dieser Klebeschicht kann der Dichtungsring in der Schulterausbildung des Punkthalters festgeklebt werden, so dass der Dichtungsring während der Fixierung des Punkthalters auf der Scheibe nicht verrutschen kann.

Die Einfüll- und Entlüftungsöffnungen können im Randbereich der Montagefläche des Punkthalters angeordnet sein. Insbesondere bei einer vollflächigen Verklebung des Punkthalters kann es jedoch vorteilhaft sein, die Einfüllöffnung in der Mitte der Montagefläche vorzusehen. Das Klebemittel kann sich dadurch beim Einfüllen in den Zwischenraum zwischen Montagefläche des Punkthalters und Scheibe in alle Richtungen radial ausbreiten, so dass die Gefahr von Lufteinschlüssen minimiert werden kann. In diesem Fall kann es vorteilhaft sein, mehrere Entlüftungsöffnungen vorzusehen, die umfangmäßig verteilt im Randbereich der Montagefläche angeordnet sind. Sollte es zu einer ungleichmäßigen Verteilung des Klebemittels im Zwischenraum kommen, kann dies durch die umfangmäßig verteilten Entlüftungsöffnungen wieder ausgeglichen werden. Dazu wird so lange Klebemittel in den Zwischenraum eingefüllt, bis aus allen Entlüftungsöffnungen Klebemittel wieder austritt. Um diesen Effekt zu erzielen, sollten mindestens zwei, vorzugsweise drei Entlüftungsöffnungen vorgesehen werden, die im Randbereich der Montagefläche umfangmäßig verteilt angeordnet sind.

In der Regel ist die Anschlusseinheit zur lösbaren Befestigung des Punkthalters an einem Bauanschlusselement mittig des Punkthalters und damit mittig der Montagefläche des Punkthalters angeordnet. In diesem Fall kann die Einfüllöffnung im Bodenbereich der Anschlusseinheit vorgesehen werden. Die Einfüllöffnung ist nach der Befestigung des Punkthalters an dem Bauanschlusselement von außen nicht mehr erkennbar, so dass Spuren des Klebemittels, die im Bereich der Einfüllöffnung zu Verschmutzungen des Punkthalters geführt haben, nicht mehr sichtbar sind. Der Punkthalter bietet so einen optisch ansprechenden Eindruck, was insbesondere bei frei zugänglichen Scheiben-Elementen, beispielsweise bei Geländer-Elementen wichtig ist.

In einer vorteilhaften Ausführungsform kann in der Montagefläche des Punkthalters eine umlaufende Ringnut vorhanden sein, die vom Rand der Montagefläche einen gewissen Abstand aufweist. In diesem Bereich zwischen dem Randbereich der Montagefläche und der umlaufenden Ringnut sind in diesem Fall auch die Einfüllöffnungen und die Entlüftungsöffnungen vorhanden. In die Ringnut kann ein Dichtungsring eingesetzt werden, insbesondere kann der Dichtungsring in diese Ringnut eingeklebt werden, um eine möglichst einfache Montage des Punkthalters zu ermöglichen. Vorzugsweise kann die Ringnut kreisförmig ausgebildet sein, so dass ein handelsüblicher Dichtungsring verwendet werden kann.

Der Punkthalter wird somit nicht mehr vollflächig mit der Scheibe verklebt, vielmehr wird lediglich eine ringförmige Verklebung bewirkt. Insbesondere bei einer größeren Montagefläche des Punkthalters kann auf diese Weise ein Teil des teuren Klebemittels eingespart werden, ohne Abstriche bei der Stabilität des Punkthalters hinnehmen zu müssen. Vielmehr werden durch die ringförmige Klebeschicht die auftretenden Kräfte gleichmäßig verteilt. Bei gleicher Menge an Klebemittel ist darüber hinaus durch diese Ausführungsform die Verwendung eines größeren Punkthalters mit einer größeren Montagefläche möglich, so dass mögliche Spannungen weiter außen liegen.

Um die Ausrichtung des Punkthalters auf der Scheibe bei der Montage zu erleichtern, kann die Montagefläche des Punkthalters vorzugsweise einen kreisförmigen Querschnitt aufweisen. Während grundsätzlich auch andere Querschnitte der Montagefläche möglich sind, um den Punkthalter und damit auch das Scheiben-Element an die Wünsche des Architekten beziehungsweise des Bauherrn anzupassen, sind kreisförmige Punkthalter besonders wirtschaftlich auf der Scheibe zu positionieren, da keine separate Ausrichtung des Punkthalters erfolgen muss. Darüber hinaus kann die äußere Manschette beziehungsweise der äußere Dichtungsring ohne besondere Vorkehrungen angelegt werden, so dass eine gleichmäßige Abdichtung erfolgen kann und die Montage des Punkthalters entsprechend wirtschaftlich ist.

Durch die Verwendung eines erfindungsgemäßen Punkthalters kann das Scheiben-Element darüber hinaus mit ein einer Klebeschicht in einer definierten, vorbestimmbaren Dicke versehen werden. Die Befestigung des Punkthalters an der Scheibe ist dadurch reproduzierbar, so dass derartige Scheiben-Elemente auch bei statisch relevanten Verglasungen eingesetzt werden können.

Bei der Befüllung des Zwischenraums mit dem Klebemittel bleibt es in der Regel nicht aus, dass zumindest ein kleiner Teil des Klebemittels aus der Entlüftungsöffnung wieder austritt, da eine vollständige Befüllung des Zwischenraums erfolgen soll. Die Montagefläche des Punkthalters kann bei den Scheiben-Elementen daher von einer Dekorschale auf ihrer Oberseite abgedeckt werden. Diese Dekorschale kann ebenso wie der Punkthalter selbst aus Edelstahl oder einem anderen Metall bestehen. Alternativ dazu kann die Dekorschale farblich an die Kundenwünsche angepasst werden. Die Dekorschale muss nicht die gleiche Außenumfangskontur wie die Punkthalter aufweisen. Während die Montagefläche des Punkthalters insbesondere kreisförmig ausgebildet sein sollte, kann die Dekorschale beliebige Formen aufweisen, so dass eine nachträgliche Verkleidung der Montagefläche möglich ist. Die Dekorschale kann neben den Entlüftungsöffnungen auch die Einfüllöffnung abdecken, sofern diese nicht im Bereich der Anschlusseinheit des Punkthalters angeordnet sind.

Während es bei kleineren Vordächern ausreichend sein kann, einen einzelnen Punkthalter zur Montage eines erfindungsgemäßen Scheiben-Elements vorzusehen, sind in der Regel mehrere Punkthalter an einer Scheibe eines Scheiben-Elements vorhanden. Die Punkthalter können dabei im mittleren Bereich der Scheibe angeordnet sein; nachdem eine Bohrung jedoch nicht erforderlich ist, können die erfindungsgemäßen Punkthalter auch im Randbereich der Scheibe vorhanden sein. In diesem Fall können benachbarte Scheiben über ihre jeweiligen Punkthalter verbunden werden. Beispielsweise könnten zwei Punkthalter, die jeweils eine etwa halbkreisförmige Montagefläche aufweisen, direkt am Rand von benachbarten Scheiben angeordnet und mittels eines gemeinsamen Bauanschlusselements aneinander befestigt werden. Die Scheiben könnten damit direkt nebeneinander positioniert werden, so dass optisch der Eindruck eines einzigen Punkthalters entstehen würde. Auch im Randbereich der Scheiben-Elemente kann die Anbringung eines beispielsweise halbkreisförmigen Punkthalters vorgezogen werden, um einen optisch ansprechenden Abschluss des entsprechenden Scheiben-Elements zu erhalten.

Um den erfindungsgemäßen Punkthalter auf der Scheibe zu befestigen, wird zunächst die äußere Manschette beziehungsweise der äußere Dichtungsring an dem Punkthalter befestigt. Dies kann insbesondere durch eine Klebeschicht an der Manschette oder dem Dichtungsring erfolgen. Auch eine lösbare Befestigung des äußeren Dichtungsrings beziehungsweise der äußeren Manschette wäre denkbar. Sofern ein Punkthalter mit einer inneren Ringnut verwendet wird, wird parallel dazu auch der innere Dichtungsring in der Ringnut befestigt. Anschließend kann der Punkthalter auf der Scheibe positioniert werden. In dieser gewünschten Position muss der Punkthalter lagefixiert werden, damit dieser beim Einfüllen des Klebemittels in den Zwischenraum nicht verrutschen kann. Diese Lagefixierung kann beispielsweise mittels einer Vorrichtung erfolgen, die später näher beschrieben wird. Nachdem beim Befüllvorgang des Zwischenraums das Klebemittel nicht unter den Dichtungsringen entweichen darf, erfolgt die Lagefixierung des Punkthalters vorzugsweise unter einem definierten Druck, der insbesondere von dem verwendeten Klebemittel und den verwendeten Dichtungsringen abhängen kann. Anschließend kann das Klebemittel durch die zumindest eine Einfüllöffnung in den Zwischenraum eingefüllt werden. Dies kann manuell erfolgen; alternativ dazu kann die Vorrichtung zur Lagefixierung des Punkthalters über eine entsprechende Befülleinrichtung verfügen. Sobald erkannt wird, dass der Zwischenraum vollständig mit dem Klebemittel befüllt worden ist, wird der Befüllvorgang gestoppt. Dies kann über eine Sensoreinheit erfolgen, die beispielsweise die Menge des eingefüllten Klebemittels bestimmt oder optisch den Befüllvorgang überwacht. Eine entsprechende Kontrolle kann auch manuell erfolgen, beispielsweise über eine Sichtkontrolle, bei der so lange Klebemittel eingefüllt wird, bis dieses aus der Entlüftungsöffnung wieder austritt. Sofern das Klebemittel eine gewisse Zeit aushärten muss, sollte die Lagefixierung des Punkthalters über diesen Zeitraum noch aufrechterhalten werden, ansonsten kann die Lagefixierung, beispielsweise die entsprechende Vorrichtung, gelöst werden und der Befestigungsvorgang ist abgeschlossen. Bei der Verwendung eines lösbaren äußeren Dichtungsrings beziehungsweise einer lösbaren äußeren Manschette könnte diese zu diesem Zeitpunkt wieder entfernt werden.

Zur Durchführung dieses Verfahrens zur Befestigung eines erfindungsgemäßen Punkthalters mittels einer Klebeschicht an einer Scheibe bietet sich die Verwendung der erfindungsgemäßen Vorrichtung gemäß den Ansprüchen 9 bis 12 an. Die erfindungsgemäße Vorrichtung besitzt eine Auflagereinheit zur abstützenden Aufnahme der Scheibe und eine Fixiereinheit zur Lagefixierung des Punkthalters auf der Scheibe. Darüber hinaus ist eine Befülleinrichtung vorhanden, mittels der ein Klebemittel in den zwischen der Scheibe und der Montagefläche des Punkthalters vorhandenen Zwischenraum eingefüllt werden kann. Um den Befüllvorgang des Klebemittels kontrollieren zu können, ist eine Sensoreinrichtung vorhanden.

Grundsätzlich kann die Montage des Punkthalters sowohl an einer horizontal ausgerichteten Scheibe als auch an einer vertikal ausgerichteten Scheibe erfolgen. Um eine möglichst gleichmäßige Verteilung des Klebemittels im Zwischenraum zu ermöglichen, kann es vorteilhaft sein, die Scheibe während des Befüllvorgangs mit dem Klebemittel horizontal zu lagern. In diesem Fall bietet sich eine Auflagereinheit in Form eines Lagertisches an, auf dem die Scheibe horizontal abgelegt werden kann.

Die Fixiereinheit zur Lagefixierung des Punkthalters auf der Scheibe kann in Form eines Niederhalters ausgebildet sein. Durch den Niederhalter kann der Punkthalter unter einem definierten Druck auf der Scheibe lagefixiert werden, so dass der Punkthalter auch während des Befüllvorgangs mit dem Klebemittel nicht auf der Scheibe verrutschen kann. Insbesondere während des Befüllvorgangs muss eine Bewegung des Punkthalters ausgeschlossen werden können, um eine saubere Befüllung mit Klebemittel zu gewährleisten. Bei einem Verrutschen des Punkthalters bestünde die Gefahr, dass sich keine einheitliche Klebeschicht ausbilden kann und eine sichere Befestigung des Punkthalters nicht möglich ist. Darüber hinaus könnte das Klebemittel auslaufen, was zu sichtbaren Spuren auf der Scheibe führen würde, die den optischen Eindruck des späteren Scheiben-Elements beeinträchtigen würden.

Alternativ oder zusätzlich dazu kann die Fixiereinheit einen Greifarm aufweisen. Der Greifarm kann mit einem vorbereiteten Punkthalter bestückt werden und diesen zunächst an einer vorbestimmten Position auf der Scheibe ablegen, um ihn anschließend in dieser Position zu fixieren. Das Bestücken des Greifarms kann beispielsweise manuell erfolgen, der Greifarm könnte sich den Punkthalter auch selbständig aus einem Vorrat an Punkthaltern ergreifen.

Die Befülleinrichtung der Vorrichtung kann im einfachsten Fall als manuelle Befülleinrichtung ausgebildet sein, mittels der das Klebemittel beispielsweise in den Zwischenraum eingespritzt werden kann. Unabhängig von der Art der Befüllung kann die Befülleinrichtung als Klebespender ausgebildet sein. Dabei können insbesondere Zwei-Komponenten-Klebespender vorteilhaft sein, um eine optimale Befestigung des Punkthalters zu ermöglichen.

Mittels der Sensoreinheit kann der Befüllvorgang des Klebemittels überwacht werden. Sofern die Sensoreinheit über eine Steuereinheit verfügt, kann der Befüllvorgang automatisch von der Steuereinheit gestoppt werden, sobald die Sensoreinheit das erfolgreiche Ende eines Befüllvorgangs meldet. Die Kontrolle des Befüllvorgangs kann beispielsweise über die eingefüllte Menge - beispielsweise Volumen und/oder Gewicht - des Klebemittels erfolgen. Alternativ oder zusätzlich dazu kann eine optische Kontrolle des Befüllvorgangs erfolgen. Zu diesem Zweck kann die Sensoreinheit beispielsweise das Austreten von Klebemittel aus den Entlüftungsöffnungen kontrollieren. Bei einer Verwendung von transparenten Scheiben könnte auch eine optische Kontrolle der eingebrachten Klebeschicht erfolgen.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: einen Querschnitt durch eine erste Ausführungsform des erfindungsgemäßen Punkthalters, der an einer Glasscheibe befestigt ist,
- Fig. 2: eine perspektivische Ansicht des Punkthalters gemäß Fig. 1,
- Fig. 3: einen Querschnitt durch eine zweite Ausführungsform des erfindungsgemäßen Punkthalters, der an einer Glasscheibe befestigt ist,
- Fig. 4: eine perspektivische Ansicht der Montagefläche des Punkthalters gemäß Fig. 1 und 2,
- Fig. 5: eine perspektivische Ansicht der Montagefläche des Punkthalters gemäß Fig. 3,
- Fig. 6: eine perspektivische Ansicht der Montagefläche des Punkthalters gemäß Fig. 5 mit einzusetzenden Dichtungsringen,
- Fig. 7: eine Sicht durch die Scheibe auf einen an der Scheibe montierten Punkthalter gemäß Fig. 1, 2 und 4,
- Fig. 8: eine Sicht durch die Scheibe auf einen an der Scheibe montierten Punkthalter gemäß Fig. 3, 5 und 6 und
- Fig. 9: eine schematische Ansicht einer erfindungsgemäßen Vorrichtung zur Befestigung des Punkthalters an einer Scheibe.

### WEGE ZUM AUSFÜHREN DER ERFINDUNG

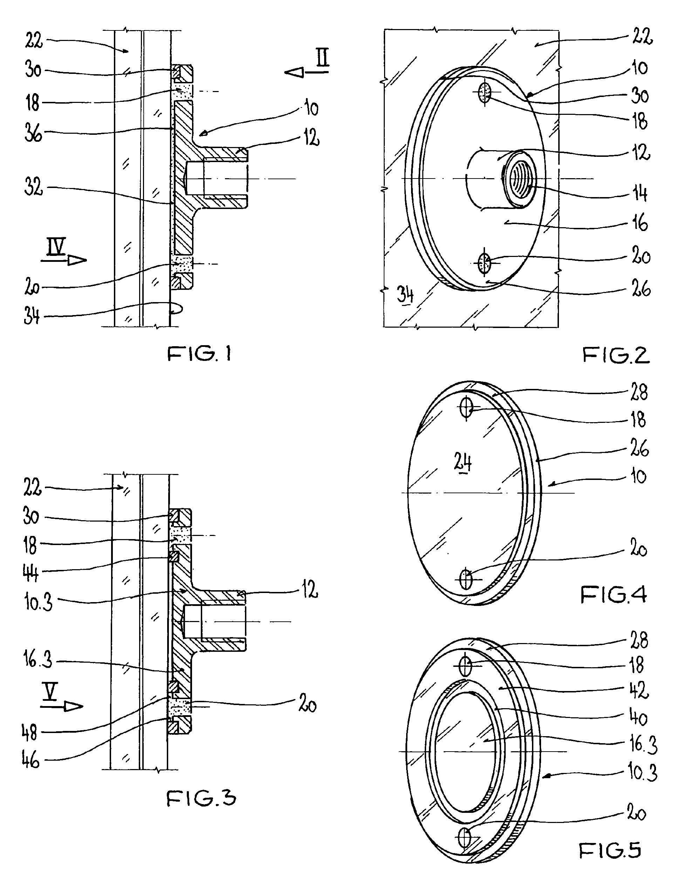

Eine erste Ausführungsform eines Punkthalters 10 ist in den Fig. 1, 2, 4 und 7 dargestellt. Der Punkthalter 10 besitzt eine Anschlusseinheit 12 mit einem Innengewinde 14. An dem Innengewinde 14 kann ein hier nicht dargestelltes Bauanschlusselement befestigt werden. Im Gegensatz zu der hier dargestellten Anschlusseinheit 12 könnten auch andere Anschlusseinheiten verwendet werden.

Die Anschlusseinheit 12 ist mittig der kreisförmigen Montagefläche 16 des Punkthalters 10 angeordnet. Im vorliegenden Beispielsfall sind Anschlusseinheit 12 und Montagefläche 16 einteilig miteinander verbunden. Im Gegensatz dazu könnte die Anschlusseinheit auch an der Montagefläche des Punkthalters befestigt werden, beispielsweise mittels eines Gewindes oder über eine Schweißverbindung.

In der Montagefläche 16 des Punkthalters 10 befindet sich eine Einfüllöffnung 18 und eine Entlüftungsöffnung 20. Einfüllöffnung 18 und Entlüftungsöffnung 20 sind im vorliegenden Beispielsfall jeweils im Randbereich der Montagefläche 16 angeordnet und liegen sich genau gegenüber. Es wäre daher bei diesem Ausführungsbeispiel auch möglich, das Klebemittel durch die Entlüftungsöffnung 20 einzufüllen und die Einfüllöffnung 18 zur Entlüftung zu verwenden. In der der Scheibe 22 zugewandten Unterseite 24 der Montagefläche 16 ist im Randbereich 26 eine umlaufende Schulterausbildung 28 ausgebildet. In diese umlaufende Schulterausbildung 28 kann ein Dichtungsring 30 eingesetzt werden. Der Dichtungsring 30 ist dabei etwas dicker als die Tiefe der Schulterausbildung 28 ausgebildet, so dass der eingesetzte Dichtungsring 30 etwas über die Unterseite 24 der Montagefläche 16 übersteht.

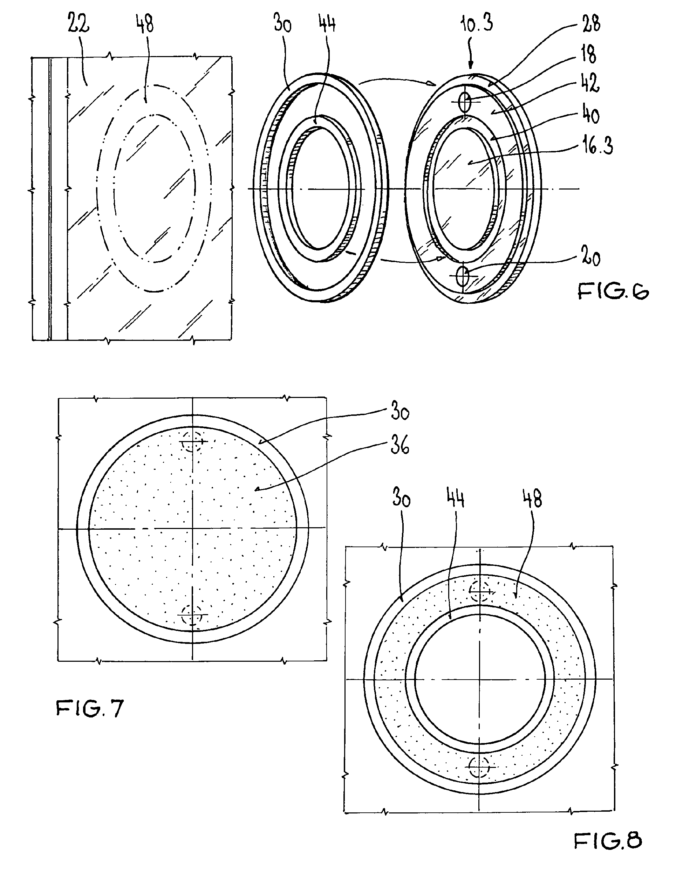

Bei der Positionierung des Punkthalters 10 auf der Scheibe 22 entsteht somit ein Zwischenraum 32 zwischen der Unterseite 24 der Montagefläche 16 und der Oberseite 34 der Scheibe 22. Auch bei einer Lagefixierung des Punkthalters 10 unter einem definierten Druck, wie er zum Befüllen mit Klebemittel erforderlich ist, bleibt dieser Zwischenraum 32 erhalten. Der Zwischenraum 32 wird über die Einfüllöffnung 18 mit einem Klebemittel befüllt, so dass sich eine vollflächige, kreisförmige Klebeschicht 36 in dem Zwischenraum 32 ausbildet (Fig. 7). Die in dem Zwischenraum 32 vorhandene Luft kann während des Befüllvorgangs durch die Entlüftungsöffnung 20 entweichen, so dass sich keine Lufteinschlüsse in der Klebeschicht 36 ausbilden können.

Eine zweite Ausführungsform eines Punkthalters 10.3 ist in den Fig. 3, 5, 6 und 8 dargestellt. Der Punkthalter 10.3 besitzt ebenso wie der Punkthalter 10 eine Anschlusseinheit 12 mit einem Innengewinde 14. Neben der Schulterausbildung 28 weist die Montagefläche 16.3 des Punkthalters 10.3 eine kreisförmige Ringnut 40 auf. In dem äußeren Bereich 42 zwischen der Schulterausbildung 28 und der Ringnut 40 sind die Einfüllöffnung 18 und die Entlüftungsöffnung 20 angeordnet. In die Ringnut 40 kann ein weiterer Dichtungsring 44 eingesetzt werden, der vergleichbar dem äußeren Dichtungsring 30 als innere Begrenzung für das einzufüllende Klebemittel dient. Da nur der ringförmige Zwischenraum 46 zwischen dem äußeren Bereich 42 der Montagefläche 16 und der Oberseite 34 der Scheibe 22 mit dem Klebemittel befüllt werden kann, bildet sich im vorliegenden Beispielsfall eine ringförmige Klebeschicht 48 aus (Fig. 8).

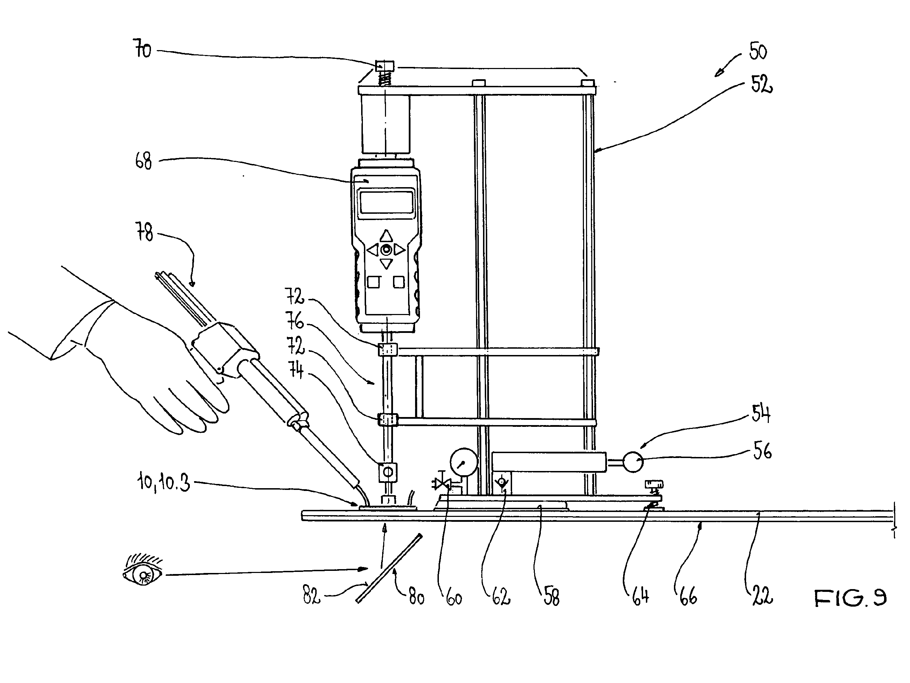

Eine schematische Ansicht einer Vorrichtung 50 zur Montage eines Punkthalters 10, 10.3 an einer Scheibe 22 ist in Fig. 9 dargestellt. Die Vorrichtung 50 besitzt ein Gestell 52. Der Standfuß 54 des Gestells 52 weist eine Vakuumpumpe 56 auf, die mit einer Saugglocke 58 verbunden ist. Über ein Flutventil 60 kann die Saugglocke belüftet werden. Aus Sicherheitsgründen ist im vorliegenden Beispielsfall zwischen der Vakuumpumpe 56 und der Saugglocke 58 ein Rückschlagventil 62 angeordnet. Darüber hinaus besitzt der Standfuß 54 einen einstellbaren Stützsporn 64, damit keine Kipplast auf die Saugglocke 58 wirken kann.

Über den Standfuß 54 kann das Gestell 52 sicher auf einer Auflagereinheit 66 der Vorrichtung 50 fixiert werden. Die Auflagereinheit 66 ist im vorliegenden Beispielsfall in Form eines Lagertisches ausgebildet, auf dem die Scheibe 22 horizontal abgelegt ist. Auf der Scheibe 22 ist im vorliegenden Beispielsfall bereits ein Punkthalter 10, 10.3 positioniert worden.

An dem Gestell 52 der Vorrichtung 50 ist eine Kraftmessdose 68 mittels eines Schraubgewindes 70 befestigt. Über die Kraftmessdose 68 ist der Druck, der mittels der Vakuumpumpe 56 auf den Punkthalter 10, 10.3 wirkt, einstellbar, so dass der Punkthalter 10, 10.3 mit einem definierten Druck auf die Scheibe 22 gedrückt wird. Um eine exakte Ausrichtung des Punkthalters 10, 10.3 auf der Scheibe 22 zu ermöglichen, sind im vorliegenden Beispielsfall zwei Geradeführ 72 und ein Balancier 74 zwischen der Kraftmessdose 68 und dem Punkthalter 10, 10.3 eingebaut, so dass sich kein Keilfehler in der Klebeschicht ausbilden kann. Kraftmessdose 68, Geradeführ 72 und Balancier 74 bilden im vorliegenden Beispielsfall mit der Vakuumpumpe 56 die Fixiereinheit 76 der Vorrichtung 50. Im Gegensatz zu dem hier dargestellten Ausführungsbeispiel sind auch andere Ausführungsformen der Fixiereinheit möglich.

Die Vorrichtung 50 besitzt darüber hinaus eine Befülleinrichtung 78, die in der hier dargestellten Ausführungsform manuell zu bedienen ist. Die Befülleinrichtung 78 ist als Zwei-Komponenten-Klebespender ausgebildet, da als Klebemittel im vorliegenden Beispielsfall ein Zwei-Komponenten-Kleber verwendet werden soll. Mittels der Befülleinrichtung 78 kann das gewünschte Klebemittel in den Zwischenraum 32, 46 eingefüllt werden, so dass sich eine einheitliche Klebeschicht 36, 48 ausbildet und der Punkthalter 10, 10.3 dauerhaft und sicher an der Scheibe 22 befestigt ist.

Der Befüllvorgang wird mittels einer Sensoreinrichtung 80 überwacht. Die Sensoreinrichtung 80 kann im einfachsten Fall wie hier aus einem Spiegel 82 bestehen, der unterhalb der Scheibe angeordnet ist, so dass über eine Sichtprüfung der Fortschritt des Befüllvorgangs überprüft werden kann. Alternativ oder zusätzlich dazu kann eine Überprüfung dahingehend erfolgen, ob Klebemittel bereits aus den Entlüftungsöffnungen 20 des Punkthalters 10, 10.3 austritt. Die Sensoreinrichtung kann auch über elektronische Sensoren verfügen, die beispielsweise auf austretendes Klebemittel reagieren. Auch die eingefüllte Menge des Klebemittels könnte von der Sensoreinrichtung überwacht werden. Sofern die Sensoreinrichtung über eine Steuereinheit verfügt, könnte die Steuereinheit den Befüllvorgang automatisch beenden, sobald das Ende des Befüllvorgangs von der Sensoreinrichtung angezeigt wird.

## Patentansprüche

1. Punkthalter (10, 10.3) zur Befestigung einer Scheibe (22) an einem Bauanschlusselement
- mit einer Anschlusseinheit (12) zur lösbaren Befestigung des Punkthalters (10, 10.3) an einem Bauanschlusselement,
- mit einer Montagefläche (16, 16.3) zur Befestigung des Punkthalters (10, 10.3) mittels einer Klebeschicht (36, 48) an einer Scheibe (22),
- mit zumindest einer Einfüll- oder Entlüftungsöffnung (18, 20) in der Montagefläche (16, 16.3) des Punkthalters (10, 10.3).

2. Punkthalter nach Anspruch 1,
- **dadurch gekennzeichnet, dass**
- zumindest eine Einfüllöffnung (18) und zumindest eine Entlüftungsöffnung (20) in der Montagefläche (16, 16.3) des Punkthalters (10, 10.3) vorhanden ist.

3. Punkthalter nach Anspruch 1 oder 2,
- **dadurch gekennzeichnet, dass**
- im Randbereich (26) der Montagefläche (16, 16.3) eine umlaufende Schulterausbildung (28) vorhanden ist.

4. Punkthalter nach einem der Ansprüche 1 bis 3,
- **dadurch gekennzeichnet, dass**
- in der Montagefläche (16.3) eine vom Rand der Montagefläche (16.3) beabstandete umlaufende Ringnut (40) vorhanden ist.

5. Scheiben-Element
- mit zumindest einer im Abstand zu einer Unterkonstruktion spannungsarm gelagerten Scheibe (22),
- mit zumindest einem Punkthalter (10, 10.3) nach einem der vorstehenden Ansprüche, der mittels einer Klebeschicht (36, 48) an der Scheibe (22) befestigt ist,
- mit einem Bauanschlusselement, das einerseits an dem Punkthalter und andererseits an einer Unterkonstruktion befestigbar ist.

6. Scheiben-Element nach Anspruch 5,
- **dadurch gekennzeichnet, dass**
- der zumindest eine Punkthalter (10) mittels einer vollflächigen Klebeschicht (36) an der Scheibe (22) befestigt ist.

7. Scheiben-Element nach Anspruch 5 oder 6,
- **dadurch gekennzeichnet, dass**
- in der inneren Ringnut (40) des zumindest einen Punkthalters (10.3) ein Dichtungsring (44) angeordnet ist,
- dieser Punkthalter (10.3) mittels einer ringförmigen Klebeschicht (48) an der Scheibe (22) befestigt ist.

8. Scheiben-Element nach einem der Ansprüche 5 bis 7,
- **dadurch gekennzeichnet, dass**
- die Klebeschicht (36, 48) eine definierte Dicke aufweist.

9. Vorrichtung (50) zur Montage eines Punkthalters (10, 10.3) nach einem der Ansprüche 1 bis 4 an einer Scheibe (22),
- mit einer Auflagereinheit (66) zur abstützenden Aufnahme der Scheibe (22),
- mit einer Fixiereinheit (76) zur Lagefixierung des Punkthalters (10, 10.3) auf der Scheibe (22),
- mit einer Befülleinrichtung (78) zum Einfüllen des Klebemittels in den Zwischenraum (32, 46) zwischen der Scheibe (22) und der Montagefläche (16, 16.3) des Punkthalters (10, 10.3),
- mit einer Sensoreinrichtung (80) zur Kontrolle des Befüllvorgangs des Klebemittels.

10. Vorrichtung nach Anspruch 9,
- **dadurch gekennzeichnet, dass**
- die Fixiereinheit in Form eines Niederhalters ausgebildet ist, mittels dem der Punkthalter (10, 10.3) unter einem definierten Druck auf der Scheibe (22) lagefixierbar ist.

11. Vorrichtung nach Anspruch 9 oder 10,
- **dadurch gekennzeichnet, dass**
- die Befülleinrichtung (78) als Klebespender, insbesondere als Zwei-Komponenten-Klebespender ausgebildet ist.

12. Vorrichtung nach einem der Ansprüche 9 bis 11,
- **dadurch gekennzeichnet, dass**
- der Befüllvorgang des Klebemittels mittels der Sensoreinheit optisch kontrollierbar ist.

13. Verfahren zum Befestigen eines Punkthalters (10, 10.3) nach einem der Ansprüche 1 bis 4 an einer Scheibe (22), mit folgenden Verfahrensschritten:
a) eine äußere Manschette oder ein äußerer Dichtungsring (30) wird an dem Punkthalter (10, 10.3) befestigt,
b) der Punkthalter (10, 10.3) wird auf der Scheibe (22) positioniert und lagefixiert,
c) das Klebemittel wird durch die zumindest eine Einfüllöffnung (18) des Punkthalters (10, 10.3) in den Zwischenraum (32,46) zwischen Punkthalter (10, 10.3) und Scheibe (22) eingefüllt,
d) der Befüllvorgang wird gestoppt, sobald der Zwischenraum (32, 46) vollständig mit Klebemittel befüllt wurde,
e) die Lagefixierung des Punkthalters (10, 10.3) wird gelöst.

14. Verfahren nach Anspruch 13,
- **dadurch gekennzeichnet, dass**
- die Befestigung der äußeren Manschette oder des äußeren Dichtungsrings an dem Punkthalter mittels einer Klebeschicht an der äußeren Manschette oder dem äußeren Dichtungsring erfolgt.

15. Verfahren nach Anspruch 13 oder 14,
- **dadurch gekennzeichnet, dass**
- ein innerer Dichtungsring (44) vor oder nach Verfahrensschritt a) in der Ringnut (40) des Punkthalters (10.3) befestigt wird.

16. Verfahren nach einem der Ansprüche 13 bis 15,
- **dadurch gekennzeichnet, dass**
- nach Verfahrensschritt e) der äußere Dichtungsring (30) oder die äußere Manschette wieder von dem Punkthalter (10, 10.3) entfernt wird.

17. Verfahren nach einem der Ansprüche 13 bis 16,
- **dadurch gekennzeichnet, dass**
- nach Verfahrensschritt d) die Lagefixierung des Punkthalters (10, 10.3) über einen bestimmten Zeitraum aufrecht erhalten bleibt, bevor Verfahrensschritt e) erfolgt.
